**Europäisches Patentamt**

**European Patent Office**

**Office européen des brevets**

(19)

(11) Veröffentlichungsnummer : **0 191 895**
**B1**

(12) **EUROPÄISCHE PATENTSCHRIFT**

(45) Veröffentlichungstag der Patentschrift :
09.11.88

(51) Int. Cl.⁴ : **F 16 J 15/34**

(21) Anmeldenummer : **85111708.5**

(22) Anmeldetag : **17.09.85**

(54) **Hydrostatische Wellendichtung bzw. hydrodynamische Wellendichtung.**

(30) Priorität : **22.12.84 DE 3447102**

(43) Veröffentlichungstag der Anmeldung :
**27.08.86 Patentblatt 86/35**

(45) Bekanntmachung des Hinweises auf die Patenterteilung : **09.11.88 Patentblatt 88/45**

(84) Benannte Vertragsstaaten :
**CH DE FR GB IT LI NL SE**

(56) Entgegenhaltungen :
**EP-A- 0 032 433**
**FR-A- 2 444 866**

(73) Patentinhaber : **MAN GUTEHOFFNUNGSHÜTTE
GMBH**
**Bahnhofstrasse, 66 Postfach 11 02 40**
**D-4200 Oberhausen 11 (DE)**

(72) Erfinder : **Heinen, Manfred**
**Veilchenstrasse 1**
**D-4242 Rees 4 (DE)**

EP 0 191 895 B1

Jouve, 18, rue St-Denis, 75001 Paris, France

## Beschreibung

Die Erfindung betrifft eine hydrostatisch oder hydrodynamisch wirkende Wellendichtung, bestehend aus einem mit der Welle umlaufenden Ring und einem axial beweglichen statischen Ring, der über zwei O-Ringe gegen das Gehäuse abgedichtet ist und mit dem umlaufenden Ring radiale Dichtspalte bildet, durch die ein inkompressibles Fluid als Sperrmittel strömt und den Dichtspalt stabilisiert. Derartige Wellendichtungen für Kompressoren und andere Arbeitsmaschinen müssen die Verfahrensräume im Bereich des Wellendurchganges durch das Gehäuse zur Atmosphäre hin abdichten. Gleichzeitig darf nur wenig Sperrmittel in den Verfahrensraum gelangen.

Derartige Dichtungen bestehen aus einem mit der Welle umlaufenden Ring und einem statischen Dichtring, der gegen die Stirnseite des umlaufenden Ringes gepreßt wird und mit ihm den Dichtspalt bildet. Der statische Dichtring besitzt beim hydrostatischen Prinzip zur Sperrmittelzuführung in den Dichtspalt drei oder mehr Drosselelemente, die in ebenso viele konzentrisch auf den Umfang verteilte Taschen münden. Aus diesen Taschen strömt das Sperrmittel nach beiden Seiten durch den Dichtspalt nach außen in den Verfahrensraum und nach innen in die Atmosphäre. So kann sich abhängig vom Sperrmitteldruck ein Dichtspalt einstellen, der während des Betriebs metallische Berührung der beiden Ringe vermeidet und sich selbst durch das Wechselspiel von Sperrmittel-Drosseldurchsatz und -Spaltdurchsatz stabilisiert.

Aufgrund der selbsttätigen Stabilisierung des Dichtspaltes können Minimalspalte und somit minimale Sperrmitteldurchsätze erreicht werden, die bei den meisten bekannten Dichtungsbauarten aus fertigungstechnischen und physikalischen Gründen nur sehr schwer zu verwirklichen sind, ohne an die Grenzen der Betriebssicherheit zu gelangen.

Die geringen Sperrmittelmengen bekannter hydrostatischer und hydrodynamischer Dichtungen sind jedoch nicht in der Lage, die während des Betriebes im Spalt erzeugte Reibungswärme abzuführen. Die Dichtringe müssen von außen gekühlt werden, wenn es nicht zur Überhitzung im Spalt kommen soll. Damit ist aber die Verwendbarkeit dieser bekannten Dichtungstypen auf niedrige Umfangsgeschwindigkeiten im Dichtungsflächenbereich begrenzt.

In der FR-A-2 444 866 wird eine Wellendichtung nach dem Oberbegriff des Hauptanspruchs beschrieben, mit der eine gleichmäßige Verteilung des Kühlmittelflusses über der Innenfläche eines ringförmigen Arbeitselementes erreicht werden soll. Hierbei wird mit zunehmendem Zufuhrdruck der zur Kühlung herangezogene Sperrmittelanteil erhöht und dabei ein elastisches Element zwischen den Dichtflächen derart verformt, daß sich ein in Fließrichtung konvergierender Spalt bildet.

Aufgabe der Erfindung ist es, eine hydrostatische bzw. hydrodynamische Wellendichtung des Standes der Technik dahingehend zu verbessern, daß damit der betriebssichere Drehzahlbereich wesentlich erhöht wird.

Die Erfindung löst diese Aufgabe in der Weise, wie in den Merkmalen der Patentansprüche angegeben. Die erfindungsgemäße Dichtung besitzt eine intensive Innenkühlung, die es gestattet, sie auch in Drehzahlbereichen einzusetzen, in denen Turbokompressoren und andere hochtourige Arbeitsmaschinen betrieben werden.

Anhand der schematischen Zeichnung einer hydrostatischen Wellendichtung werden Ausführungsbeispiele der Erfindung näher erläutert.

Es zeigen :

Fig. 1 einen Längsschnitt der Wellendichtung,

Fig. 2 ein Druckbelastungs-Schaubild zu Fig. 1,

Fig. 3 einen Längsschnitt der Wellendichtung mit Verstelleinrichtung,

Fig. 4 einen Längsschnitt der Wellendichtung mit hydraulischer Belastung,

Fig. 5 ein Druckbelastungs-Schaubild zu Fig. 4.

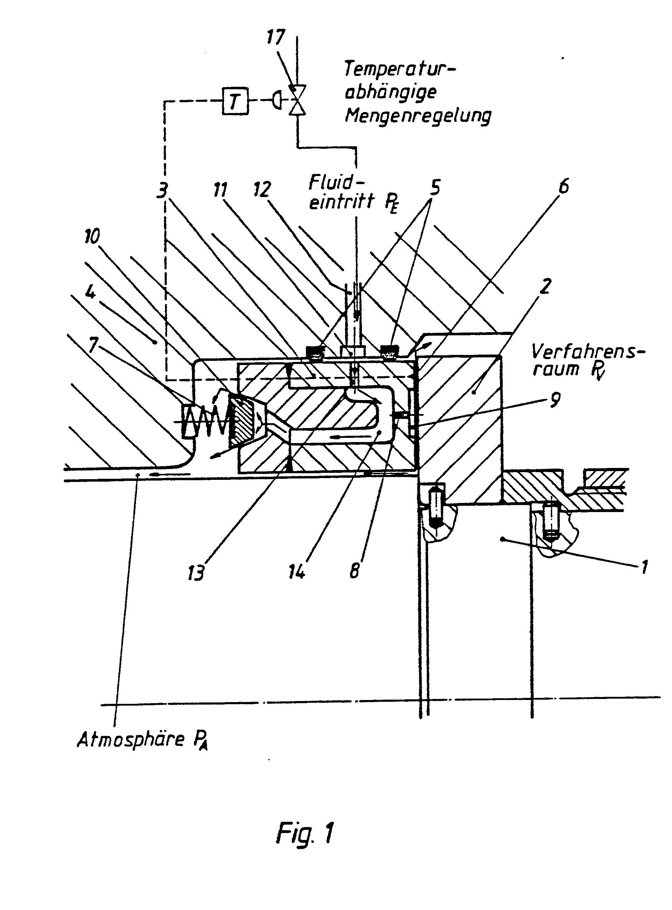

Der statische Dichtring (3) der Wellendichtung gemäß Fig. 1 besteht aus zwei miteinander verschweißten Teilen. Das inkompressible Fluid, nachstehend Sperrmittel genannt, wird über eine Bohrung (12) mit anschließender Verteilernut (11) zugeführt und gelangt über eine Anzahl auf den Umfang verteilter Bohrungen (13) in den Hohlraum (14) des statischen Dichtringes (3). Zwei O-Ringe (5) dichten den statischen Dichtring (3) gegen das Gehäuse (4) ab und gewährleisten seine axiale Beweglichkeit.

Zur Erzeugung eines erforderlichen Druckes $p_T$ in den Taschen (9), der zur Aufrechterhaltung des Sperrmittelstromes im Dichtspalt höher als der höchste Gegendruck beiderseits der Dichtfläche sein muß, wird eine Vorspannkraft über auf den Umfang verteilte Federelemente (7) aufgebracht, die sich auf einen Ring (10) abstützen, der gleichzeitig die Funktion eines Druckbegrenzungsventils übernimmt.

Wird ein eingestellter maximaler Sperrmitteleintrittsdruck erreicht, der dem Druck vor dem Drosselelement (8) entspricht, so öffnet dieses Ventil (Ring 10). Eine weitere Steigerung des Sperrmitteldurchsatzes hat, abgesehen von geringen Erhöhungen der Reibungs- und Drosselverluste — kaum Einfluß auf den Vordruck der Drosselstelle.

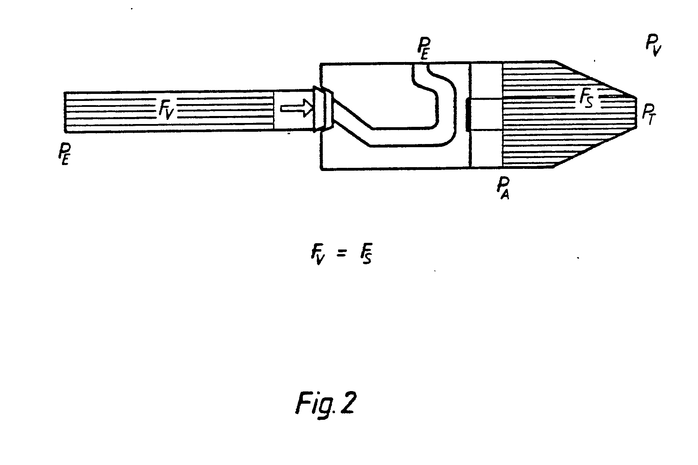

Da der gesamte Sperrmittelstrom an der Rückseite der Dichtfläche entlanggeführt wird, ergibt sich somit eine regelfähige Kühlung des Spaltbereiches ohne eine Beeinflussung bezüglich der Druck- und Strömungsverhältnisse. Insofern legt die einmal eingestellte Öffnungskraft des Druckbegrenzungsventils nicht nur den Druck $p_E$ vor der Drosselstelle fest, sie bestimmt als Reaktionskraft auf den Druckaufbau im Dichtspalt auch den Taschendruck $p_T$, der größer als der Verfahrensdruck $p_V$ sein muß (s. Fig. 2).

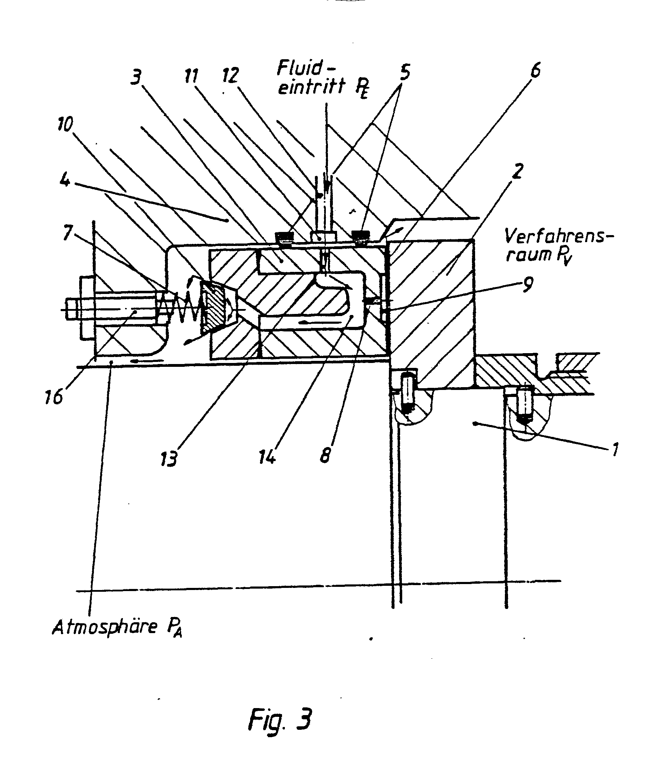

Um die Drücke vor den Drosselstellen im Spalt variieren zu können, kann über eine von außen zugängliche Verstelleinrichtung (16) die Federvorspannung verstellt werden (Fig. 3).

Fig. 2 zeigt ferner, daß die Ausführung gemäß den Fig. 1 und 3 im Niederdruckbereich bis ca. 5 bar eingesetzt werden kann, da bei höheren Drücken zur Aufrechterhaltung des Kräftegleichgewichts $F_V = F_S$ der Druck $P_E$ vor der Drossel so groß wird, daß der Sperrmitteldurchsatz durch den Dichtspalt unzulässig ansteigt.

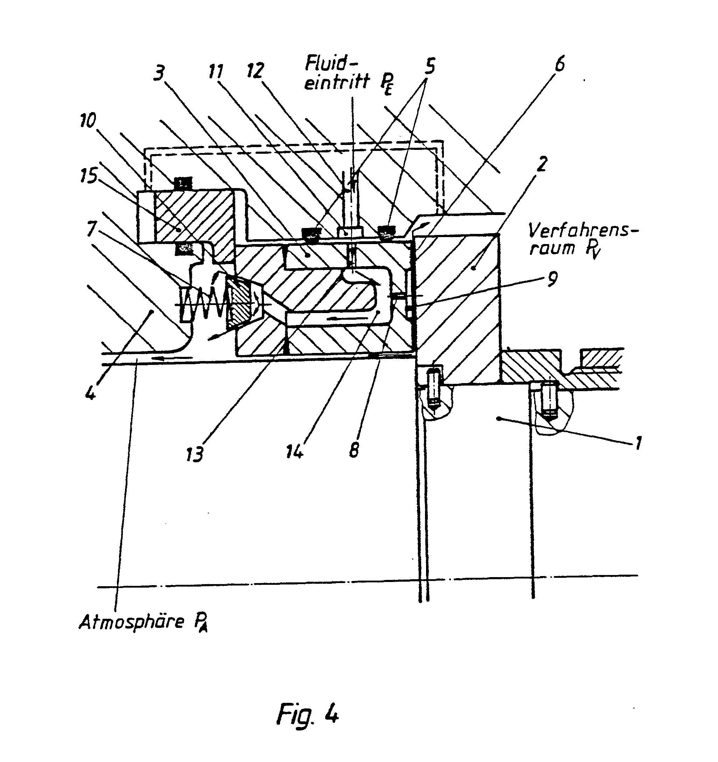

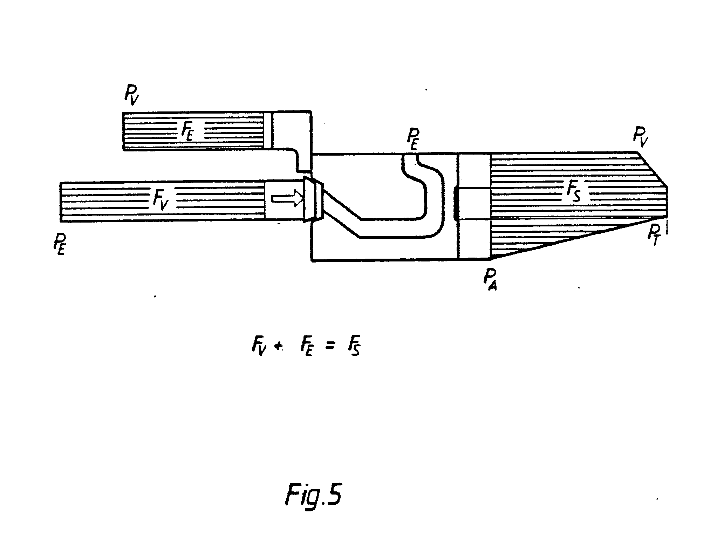

Für höhere Druckbereiche ist eine Ausführung, wie sie in Fig. 4 dargestellt ist, geeignet. Hier wird eine teilweise hydraulische Entlastung des Druckbegrenzungsventils durch den Ringkolben (15) erreicht, so daß eine Anpassung des Drosselvordrucks auf optimale Werte möglich wird (s. Fig. 5).

Die beschriebene Innenkühlung des statischen Dichtringes (3) mit Hilfe des Sperrmittelstromes ermöglicht bei einer thermostatischen Sperrmittel-Mengenregelung (17) eine stabile Temperaturregelung im Dichtflächenbereich.

Bei der hydrodynamischen Wellendichtung (nicht dargestellt) handelt es sich lediglich um eine Innenkühlung. Der Sperrmittelstrom wird hierbei nicht beeinflußt, da bei dieser Ausführung Drosselelemente (8) und Taschen (9) nicht vorhanden sind.

## Patentansprüche

1. Hydrostatisch oder pneumatisch wirkende Wellendichtung, bestehend aus einem mit der Welle (1) umlaufenden Ring (2) und einem axial beweglichen statischen Ring (3), der über zwei O-Ringe (5) gegen das Gehäuse (4) abgedichtet ist und mit dem umlaufenden Ring radiale Dichtspalte (6) bildet, durch die ein inkompressibles Fluid strömt und den Dichtspalt (6) stabilisiert, dadurch gekennzeichnet, daß der statische Dichtring (3) einen Hohlraum (14) zur Aufnahme des der Sperrung und der Kühlung dienenden inkompressiblen Fluids besitzt und eine Anzahl von vorspannenden Federelementen (7) auf dem Umfang angeordnet sind, die sich gegen einen Ring (10) abstützen, der die Funktion eines Druckbegrenzungsventils übernimmt.

2. Wellendichtung nach Anspruch 1, dadurch gekennzeichnet, daß eine von außen zugängliche Verstelleinrichtung (16) für die Verstellung der Federvorspannung vorgesehen ist.

3. Wellendichtung nach Anspruch 1, dadurch gekennzeichnet, daß ein Ringkolben (15) zur teilweisen hydraulischen Entlastung des statischen Dichtringes (3) vorgesehen ist.

4. Wellendichtung nach den Ansprüchen 1 bis 3, dadurch gekennzeichnet, daß durch eine thermostatische Mengenregelung (17) des inkompressiblen Fluids die Temperatur im Dichtspalt (6) geregelt wird.

## Claims

1. Hydrostatic or pneumatic shaft seal comprising a ring (2) revolving with the shaft (1), and an axially movable static ring (3) which is sealed relative to the housing (4) via two O-rings (5), forming a radial sealing gap (6) with the revolving ring, through which an incompressible fluid flows and stabilises the sealing gap (6), characterised in that the static sealing ring (3) has a hollow space (14) for accommodating the incompressible fluid which serves as a barrier and colling medium, and a number of pre-tensioning spring elements (7) arranged at the circumference, supported against a ring (10), which assumes the function of a pressure-limiting valve.

2. Shaft seal according to claim 1, characterised in that an externally accessible adjustment device (16) is provided for regulating the spring pre-tension.

3. Shaft seal according to claim 1, characterised in that a piston (15) is employed for partially relieving the hydraulic pressure of the static sealing ring (3).

4. Shaft seal according to claims 1 to 3, characterised in that the temperature within the sealing gap (6) is controlled by means of a thermostatic volume control (17) of the incompressible fluid.

## Revendications

1. Joint d'étanchéité pour arbre, à action hydrostatique ou pneumatique, constitué d'un anneau (2) tournant avec l'arbre (1) et un anneau statique (3) mobile axialement, qui est étanché vis-à-vis du boîtier (4) par deux anneaux toriques (5) et qui délimite avec l'anneau tournant un interstice radial d'étanchéité (6), à travers lequel s'écoule un fluide incompressible qui stabilise cet interstice d'étanchéité (6), joint d'étanchéité caractérisé en ce que l'anneau statique d'étanchéité (3) comporte un espace creux (14) prévu pour recevoir le fluide incompressible assurant le blocage et le refroidissement, tandis qu'il est prévu sur la périphérie un certain nombre d'éléments élastiques précontraints (7), qui prennent appui contre un anneau (10), assumant la fonction d'une soupape de limitation de la pression.

2. Joint d'étanchéité pour arbre selon la revendication 1, caractérisé en ce qu'il est prévu un dispositif de réglage (16), accessible de l'extérieur, pour le réglage de la contrainte des éléments élastiques.

3. Joint d'étanchéité pour arbre selon la revendication 1, caractérisé en ce qu'il est prévu un piston annulaire (15) pour permettre un délestage hydraulique partiel de l'anneau statique d'étanchéité (3).

4. Joint d'étanchéité pour arbre selon les revendications 1 à 3, caractérisé en ce que la température dans l'interstice d'étanchéité (6) est réglée par une régulation thermostatique de quantité (17) du fluide incompressible.

Fig. 1

$$F_V = F_S$$

Fig. 2

Fluideintritt $P_E$

Verfahrensraum $P_V$

Atmosphäre $P_A$

Fig. 3

**Fig. 4**

$$F_V + F_E = F_S$$

Fig.5